## Europäisches Patentamt

## European Patent Office

## Office européen des brevets

(11) Publication number: **0 055 131**
**A1**

# EUROPEAN PATENT APPLICATION

(21) Application number: **81306054.8**

(22) Date of filing: **22.12.81**

(51) Int. Cl.³: **G 01 D 13/26**

(30) Priority: **23.12.80 GB 8041103**

(43) Date of publication of application: **30.06.82**
**Bulletin 82/26**

(84) Designated Contracting States: **AT BE CH DE FR GB IT LI LU NL SE**

(71) Applicant: **O'Dell, Raymond Joseph Albert, 43A Wicklands Avenue, Saltdean Brighton East Sussex (GB)**

(72) Inventor: **O'Dell, Raymond Joseph Albert, 43A Wicklands Avenue, Saltdean Brighton East Sussex (GB)**

(74) Representative: **Kirby, Harold Douglas Benson et al, G.F. Redfern & Company Marlborough Lodge 14 Farncombe Road, Worthing West Sussex BN11 2BT (GB)**

(54) **Improvements in or relating to measuring instruments.**

(57) This invention relates to measuring instruments which have a pointer (6, 28 or 42) positioned in dependence on the value of a measured quantity such as pressure or temperature. A switching device such as a reed swith (8, 25 or 41) is attached to the tail of the pointer, and electrical connections are made to the reed switch, for example, by an earth connection and an insulated connection such as a pin (22) and/or a sleeve (21). One or more pairs of magnets (4 or 40) are contained in a cover (5) which is rotatable with respect to the instrument about the axis of rotation of the pointer. The cover (5) may include a central annular recess and a central circular boss, and a magnet holder (3) and a setting knob (2) may be secured in the recess. The cover may be rotated by means of the knob to select a temperature or pressure at which the reed switch will be actuated.

1

IMPROVEMENTS IN OR RELATING TO MEASURING INSTRUMENTS:

This invention relates to measuring instruments of the kind which have a pointer angularly positioned in dependence on the value of a measured quantity. The quantity measured may be, for example, pressure or temperature, but it is to be understood that the invention is not limited to instruments designed for measuring any particular quantity.

A measuring instrument of the kind with which the invention is concerned normally has a dial face carrying a graduated scale, and the quantity being measured is indicated by the position of one end of the pointer relative to this scale.

There is frequently a requirement for a measuring instrument which, in addition to providing a visual indication of the value of the measured quantity, will also be effective to provide an electrical signal when the measured quantity has a particular value, exceeds or falls below a particular value, or lies within a particular range of values. For this purpose, measuring instruments have been fitted with electrical switching devices of various kinds. In one particular arrangement, an electrical contact on the pointer itself, or on an arm rotating with the pointer, cooperates with a fixed contact to complete an electrical circuit when the pointer is at a particular angular position. In another arrangement, a microswitch is provided in, or on, the instrument housing, and an arm rotating with the pointer is arranged to operate this microswitch.

0055131

Both of the above arrangements suffer from various disadvantages. For example, the first arrangement described may result in arcing of the contacts when there are small fluctuations in the value of the measured quantity, while, unless the measuring device driving the pointer is sufficiently powerful, the second arrangement will place an impermissible load on the instrument which will result in inaccurate readings, and in some cases the switch will fail to operate or will operate at an incorrect value.

Accordingly it is an object of the present invention to provide a measuring instrument having means for giving an electrical signal which does not suffer from the disadvantages of known instruments.

From one aspect the invention consists in a measuring instrument having a pointer angularly positioned in dependence on the value of a measured quantity; a magnetically operated switching device carried by said pointer; setting means rotatable about the axis of rotation of the pointer; and at least one magnet located in said setting means so that it can be brought by relative rotation between said setting means and said pointer about the said axis into a position in which it causes actuation of said switching device.

Preferably the magnet is a bar magnet having a north pole at one end, and a south pole at the other end. In this case, the magnet is preferably mounted in the setting means with its magnetic axis parallel to, and displaced from, the axis of rotation of the pointer so that, as the setting means is rotated about the axis of rotation of the pointer, the magnetic axis of the magnet follows a circular path. The switching device is mounted on the pointer with its longitudinal axis parallel to the longitudinal axis of the pointer. A part of the switching device which is sensitive to a magnetic field is displaced from the axis of rotation of the pointer so that, as the pointer rotates, this part follows a circular path. The location of the magnet in the setting means and the location of the switching device on the pointer are such that the paths followed by the magnetic axis and the sensitive part of the switching device coincide.

The switching device may be, for example, a reed switch, or it may be a Hall-effect transistor. If the instrument is required to generate more than one electrical signal, an appropriate number of switching devices may be provided on the pointer.

If the instrument is required to produce the electrical signal at substantially only one value of the measured quantity, then only one magnet is provided in the setting means. In order to keep the range of values over which the electrical signal is produced to a minimum, the pole of the magnet adjacent to the switching device is preferably pointed. However, if the electrical signal is required to be produced at any value either above or below a particular value, then a plurality of magnets may be provided spanning an arc centered on the axis of rotation of the pointer. Alternatively, a single arcuate magnet may be used, said magnet again being magnetised in a direction parallel to the axis of rotation of the pointer.

In the case in which the switching device is a reed switch, moving the magnet into the proximity of the switch will normally cause the contacts to close. In the case in which the electrical signal required is the opening of an electrical circuit at a particular value of the measured quantity, two sets of magnets, or two arcuate magnets , may be provided in the setting means, a gap being left between the magnets so that the contacts open when the reed switch is in the vicinity of this gap.

4

0055131

It is, of course, to be understood that the magnets will be arranged in the setting means in order to provide the particular type of operation that is required in any particular case. Thereafter, the actual value at which the electrical signal is produced, or the actual range, or ranges, of values over which the electrical signal is produced, may be set by the operator merely by rotation of the setting means. Accordingly, the setting means are preferably provided with one or more indicating marks which may be lined up with the scale with which the pointer cooperates in order to indicate the value or range, or ranges of values, at which the electrical signal will be produced. The setting means may be constituted by all, or a part of, a transparent cover on the front of the instrument.

Methods of performing the invention will now be described with reference to the accompanying diagrammatic drawings, in which:-

Figure 1 is a side view partly in cross-section of a first embodiment of the invention;

Figure 2 is a sectional view of the instrument illustrated in Figure 1 taken on the line b:b looking in the direction of the arrows;

Figure 3 is a plan view partly broken away of a second embodiment of the invention;

Figure 4 is a side view partly in section of the embodiment illustrated in Figure 3;

Figure 5 is a plan view partly broken away of a third embodiment; and

Figure 6 is a side view partly in section of the embodiment illustrated in Figure 5.

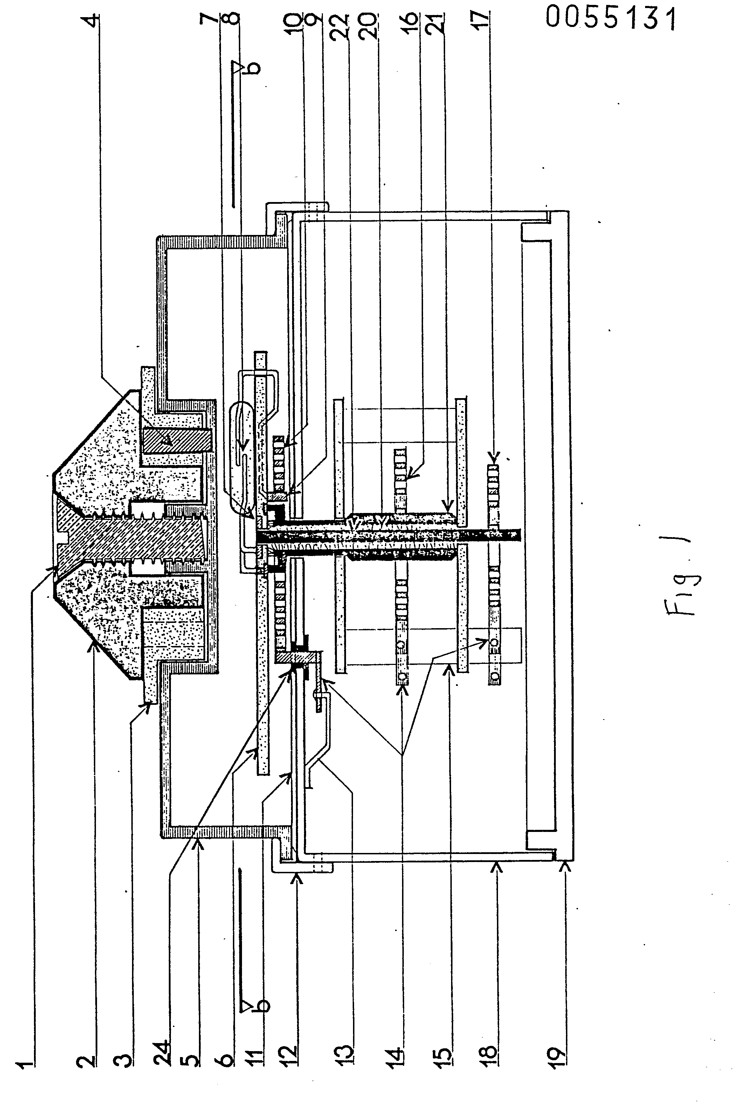

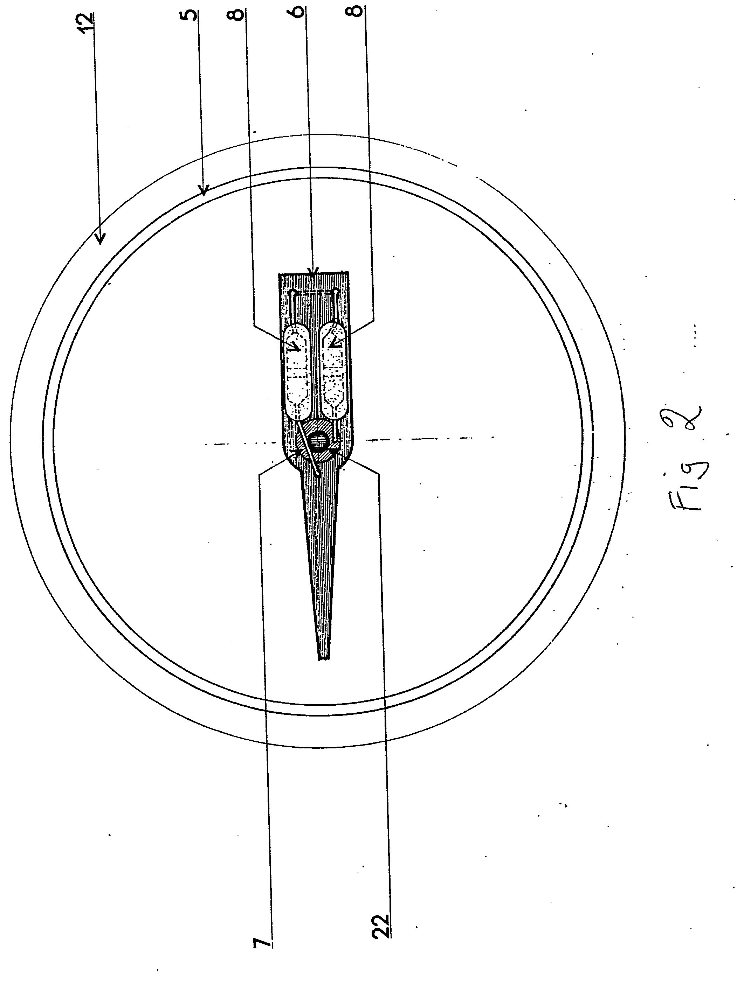

The embodiment illustrated in Figures 1 and 2 includes a metal housing 18 having a removable rear cover 19. Rigidly secured in the housing is a bridge 15 consisting of synthetic resin material which provides bearings for a spindle carrying a pointer 6. The spindle includes a central metal pin 22 surrounded by an insulating sleeve 20. The sleeve 20 is surrounded by a further sleeve 21 which consists of electrically-conductive material. Means (not shown and not forming part of the invention) are provided to rotate the assembly of the central pin and the two sleeves in response to measurements of a particular quantity such as pressure or temperature. If desired, the outer sleeve 21 may be ribbed to cooperate with a toothed rack or pinion which is moved by the measuring device.

The front of the housing is provided with a dial face 11 carrying the circumferential, or part circumferential, scale with respect to which the pointer 6 moves to indicate the value of the measured quantity. A circular ferrule 12 is secured to the housing 18 and serves to retain a cover 5 consisting of a clear synthetic resin material. The arrangement is such that the cover 5 can be rotated about the axis of the pin 22.

The cover 5 includes a central circular recess and a central circular boss. A magnet holder 3 and a knob 2 are secured in the recess by means of a screw 1 threaded in the boss. A number of holes are drilled through the magnet holder 3 and, in one of these, a magnet 4 is located. In the particular arrangement shown, a shallow recess is formed in the cover 5 to receive the lower end of the magnet 4.

Secured to the pointer 6 are two reed switches 8. Preferably the pointer consists of synthetic resin material, and the reed switches are secured to the pointer by means of a suitable adhesive. The radially outermost terminals of the two reed switches are electrically connected to a tag 9 moulded in the underside of the pointer 6. The radially innermost terminal of one of the reed switches is electrically connected to a brass washer 7 moulded into the upper surface of the pointer 6. The radially innermost terminal of the other reed switch is electrically connected to a further brass washer on the underside of the pointer. It will be seen that the brass washer 7 is in electrical contact with the pin 22, and that the further brass washer is electrically connected to the outer sleeve 21. The tag 9 is electrically connected to the housing 18 by a spiral spring 10, a tag passing through the dial face 11 and the wall of the housing 18, and an earthing strip 13. The outer sleeve 21, and hence one of the terminals of one of the reed switches, is electrically connected to a solder contact tag 14 by means of a spiral spring 16. Finally, the pin 22 is connected to a further contact tag 14 by means of a spiral spring 17. Thus, when one of the reed switches is closed, the electrical circuit is completed between the housing and the lower contact tag 14 as shown in Figure 1, while, when the other reed switch is closed, the electrical circuit is completed between the housing and the central contact tag 14.

It will be seen that, with the arrangement illustrated in Figures 1 and 2, the knob 2, together with the cover 5, may be rotated to any desired angular position about the axis of rotation of the pointer. When the measured value causes the pointer to rotate to a position in which one of the reed switches 8 is influenced by the magnetic field from the magnet 4, a circuit will be closed between one of the contact tags 14 and the housing. The arrangement may be such that, when the magnet 4 is located between the two reed switches 8 neither of the circuits is completed, while, when the magnet is over the second reed switch, the second electrical circuit is completed. Alternatively, however, it is to be understood that the two reed switches may be so close together that the two reed switches are closed successively with no intervening period in which they are both open.

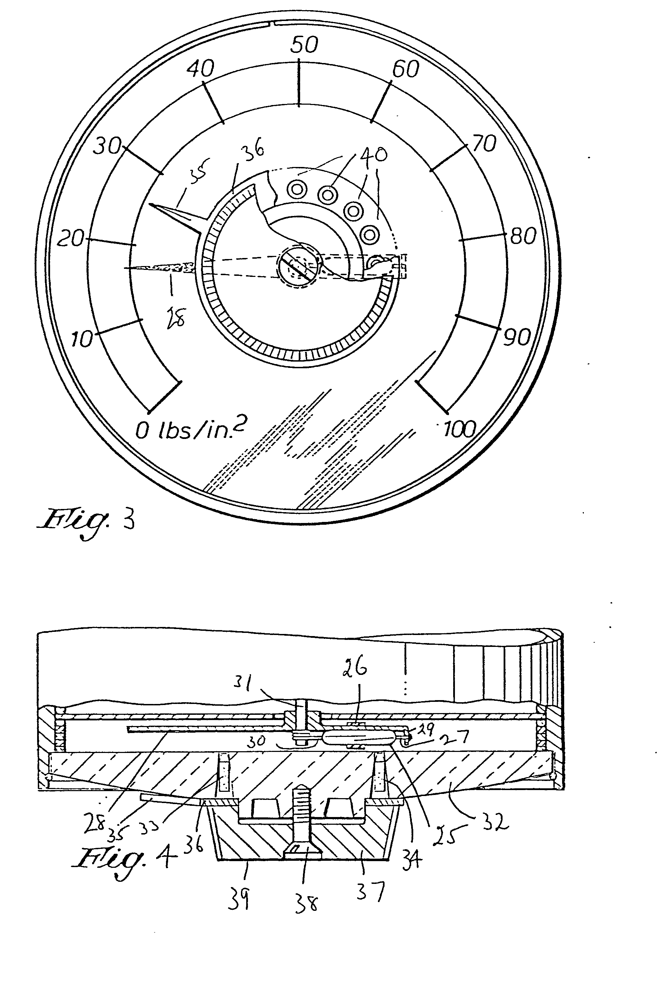

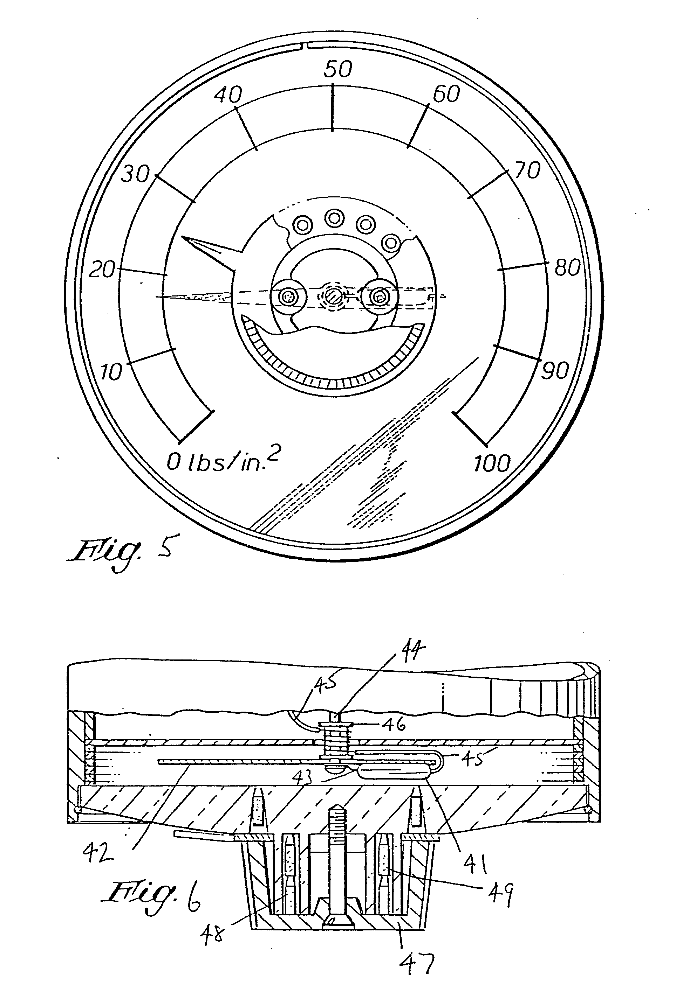

The embodiment illustrated in Figures 3 and 4 is generally similar to that illustrated in Figures 1 and 2. However, in this case, only a single reed switch 25 is provided, and it is held in position on the pointer at least partially by means of a resilient band 26. The terminal 27 at the radially outer end of the reed switch is soldered directly to the pointer 28, the rear end of which is turned up at right angles as shown at 29. The radially inner terminal 30 is connected to a fine wire which is wrapped round the spindle 31 carrying the pointer. It is then preferably passed down the centre of the spindle through an insulated sleeve so that a connection can be made to it at the far end of the spindle.

In this particular embodiment, the cover 32 is in the form of a relatively thick piece of clear synthetic resin material, and the magnets, such as those shown at 33 and 34, are mounted in tapered holes drilled, or otherwise produced, in the cover. As shown, the magnets 33 and 34 are also tapered and the dimensions are such that the points of the magnets are level with the inner surface of the cover. A pointer 35 is carried on a plate 36 held in position between the cover 32 and a knob 37 by means of a screw 38. The pointer can be set in accordance with the location of the magnet or magnets before the screw 38 is tightened. Preferably the screw 38 is itself covered by means of a disk 39 secured to the knob 37 by means of adhesive.

It will be seen in this arrangement that the plate 36, together with the pointer 35, can be rotated about the axis of the spindle 31 by slackening the screw 38. Further, if the screw 38 is completely removed so that the plate 36 and the knob 37 can also be removed, the magnets 33 and 34 can be moved into any desired ones of the holes 40 in the cover 32. Thus any desired relationship can be produced between the magnets and the pointer 35.

As in the case of the embodiment illustrated with reference to Figures 1 and 2, the magnets may be arranged either so that the reed switch contacts close at a predetermined pressure or so that the contacts remain closed over one or more ranges of pressures.

The arrangement shown in Figures 5 and 6 is generally similar to that shown in Figures 3 and 4, but, in this case, the reed switch 41 is secured to the pointer 42 by means of adhesive. The radially inner terminal 43 of the reed switch is soldered directly to the spindle 44, while the radially outer terminal is connected to a piece of insulated wire 45 which is wound round a sleeve 46 surrounding the spindle, and is led away to a terminal tag (not illustrated).

A further difference in this embodiment is that the knob 47 is made somewhat deeper  than the knob 37 so that it can accommodate spare magnets as shown at 48 and 49.

It is to be understood that the embodiments illustrated in the drawings may be modified in various ways without departing from the scope of the invention.  For example, in the arrangement illustrated in Figures 1 and 2, the two reed switches are located side-by-side on the tail of the pointer.  However, in the modified form of this embodiment, the two reed switches are located in line. In this case, two magnets or two groups of magnets may be arranged at different radii in the setting means in order to operate the reed switches at different values, for example, an upper limit value and a lower limit value.

In another modification the magnet, or magnets, are located in the dial face instead of in the cover. In this case, a large number of relatively closely spaced holes are provided in the dial face so that the value at which the switching device operates is selected merely by inserting the magnet or magnets in the required hole or holes. However, if greater accuracy of setting is required, the magnets may be contained in a rotatable setting member located below the dial face, providing the dial face itself is made of sufficiently thin material. Alternatively, the dial face may consist of a circular portion and an annular portion surrounding the circular portion, these two portions being relatively rotatable one with the other. Either of the portions may be used to carry the graduated scale, while the other portion is arranged to carry the magnets. The portion carrying the scale is stationary with respect to the instrument, while the portion carrying the magnets is rotatable about the axis of rotation of the pointer. In a particular version of this embodiment, the switching device is a Hall-effect transistor. Two rings of holes are provided, one ring is used to contain one or more magnets having their north poles adjacent to the Hall-effect transistor, while the other ring is used to contain one or more magnets having their south poles adjacent to the Hall-effect transistor.

Reference has been made to the possibility of using arcuate magnets and, when these are used, it is desirable that they should be held in an annular channel in the setting means. To retain the magnet or magnets in the desired position, it is desirable that the outer wall of the channel should be serrated, and that the outer face of the magnet or magnets should also be serrated to engage in the serrations in the wall.

In yet another alternative arrangement, the switching device is located in the setting means while the magnet is attached to the pointer. This arrangement is normally less convenient than the other arrangements described, but it is to be understood that the Claims should be construed to cover this alternative arrangement.

CLAIMS:

1.       A measuring instrument having a pointer angularly positioned in dependence on the value of a measured quantity; a magnetically operated switching device carried by said pointer; setting means rotatable about the axis of rotation of the pointer; and at least one magnet located in said setting means so that it can be brought by relative rotation between said setting means and said pointer about the said axis into a position in which it causes actuation of said switching device.

2.       An instrument as claimed in Claim 1 or Claim 2, wherein the, or each, magnet is longitudinally extending and has its magnetic axis parallel to its longitudinal axis.

3.       An instrument as claimed in Claim 2, wherein the magnetic axis of the, or each, magnet is parallel to, and displaced from, the axis of rotation of the pointer so that, as the setting means is rotated about the axis of rotation of the pointer, the magnetic axis of the, or each, magnet follows a circular path.

4.       An instrument as claimed in Claim 3, wherein the switching device is longitudinally extending, and wherein the longitudinal axis of the switching device is perpendicular to the axis of rotation of the pointer, a part of the switching device which is sensitive to a magnetic field being displaced from the axis of rotation of the pointer so that, as the pointer rotates, this part follows a circular path substantially coincident with the path followed by the magnetic axis of the, or each, magnet.

0055131

5.     An instrument as claimed in any of the preceding Claims, wherein the switching device is a reed switch.

6.     An instrument as claimed in any of Claims 1 to 4, wherein the switching device is a Hall-effect semiconducting device.

7.     An instrument as claimed in Claim 3 or Claim 4, wherein the setting means is provided with a ring of longitudinally extending cavities, the centre of the ring being located on the axis of rotation of the pointer, and the longitudinal axes of the recesses being parallel to said axis of rotation.

8.  .   An instrument as claimed in any of the preceding Claims, wherein the pointer includes a first portion extending from its axis of rotation and cooperating with a scale to provide a visual indication of the value of the measured quantity, and a second portion forming an extension of said first portion on the opposite side of the said axis of rotation, and wherein the switching device is carried on said second portion.

9.     An instrument as claimed in Claim 8, wherein the setting means are provided with one or more indicating marks which may be used in conjunction with said scale to indicate the value, or range, or ranges of values, of the measured quantity by which the switching device will be actuated.

10.     An instrument as claimed in any of the preceding Claims, wherein the setting means comprise a cover consisting of a transparent synthetic resin material and provided with a central circular recess; an annular member located in said recess and provided with a ring of axial holes extending therethrough, the centre of said ring being located on the axis of rotation of the pointer; a knob, part of which extends through said annular member; and means securing said knob, said annular member, and said cover together.

11.      An instrument as claimed in any of Claims 1 to 9, wherein the setting means comprise a cover provided with a ring of axial holes extending therethrough, the centre of said ring being located on the axis of rotation of the pointer; a generally annular plate provided with a pointed radial projection; a knob;

and means for securing the knob to the cover with the plate between the knob and the cover and closing the ends of said ring of axial holes remote from the pointer.

12.      An instrument as claimed in Claim 11, wherein the holes in said ring are tapered.

13.      An instrument as claimed in Claim 11 or Claim 12, wherein the knob is designed to accommodate a plurality of magnets additional to the magnet or magnets cooperating with the switching device.

14.      An instrument as claimed in Claim 4, wherein the switching device is provided with two terminals extending from respective ones of the device, wherein the pointer consists of electrically conductive material, and wherein one of said terminals is electrically connected to said pointer.

15.      An instrument as claimed in Claim 14, wherein the terminal radially further from the axis of rotation of the pointer is electrically connected to the pointer, and wherein the other terminal is connected by means of an insulated wire passing through the pointer to a terminal

tag.

15

16.    An instrument as claimed in Claim 14, wherein the radially inner terminal of the switching device is electrically connected to the pointer, and wherein the other terminal is connected by means of an insulated wire which is wrapped around a bobbin coaxial with the axis of rotation of the pointer to a terminal tag.

17.    An instrument as claimed in Claim 14, wherein the pointer consists of electrically insulating material, and is mounted for rotation on a shaft comprising a portion of insulating material and a portion of electrically conductive material.

18.    An instrument as claimed in  Claim 17, wherein one terminal of the switching device is connected to a terminal tag through a first  spiral spring, and wherein the other terminal of the switching device is connected to the electrically conductive portion of said spindle.

19.    An instrument as claimed in Claim 18, wherein said electrically conductive portion of the spindle is connected to a terminal tag through a spiral spring.

20.    An instrument as claimed in Claim 17, wherein    two switching devices are mounted on the pointer, wherein one terminal of each of the switching devices is electrically connected to one terminal of the other switching device and through a spiral spring to the metal casing of the instrument, wherein the spindle comprises a second electrically conductive portion separated from said first mentioned electrically conductive portion by the electrically insulating portion, and  wherein the second terminal of one of said switching devices is electrically connected to said first mentioned electrically conductive portion of the spindle and the second terminal of the other switching device is electrically connected to said second electrically conductive portion of the spindle, said two electrically conductive portions of said spindle being connected through respective spiral springs to respective terminal tags.

Fig. 1

Fig 2

*Fig.* 3

*Fig.* 4

*Fig. 5*

*Fig. 6*

0055131

European Patent Office

**EUROPEAN SEARCH REPORT**

Application number

EP 81 30 6054

| | **DOCUMENTS CONSIDERED TO BE RELEVANT** | | CLASSIFICATION OF THE APPLICATION (Int. Cl. 3) |
|---|---|---|---|
| Category | Citation of document with indication, where appropriate, of relevant passages | Relevant to claim | |
| | US - A - 3 562 681 (BINDER) | | G 01 D 13/26 |
| X | * figures; column 1, lines 21-46; column 3, line 1 - column 4, line 11 * | 1,2,5, 10,11, | |
| Y | -- | 3,4,7, 9 | |
| X | US - A - 3 683 135 (OLIVER) | | |
| | * figures; abstract; column 2, line 47 - column 3, line 9 * | 1,2,5 | |
| | -- | | **TECHNICAL FIELDS SEARCHED (Int.Cl. 3)** |
| Y | US - A - 4 056 748 (CROSS et al.) | | |
| | * abstract; figure 1; column 1, lines 40-61 * | 3,4,7 | G 01 D 13/00 G 12 B 11/00 G 01 P 3/00 |
| | -- | | |
| Y | US - A - 3 332 014 (ORTHS et al.) | | |
| | * figures; column 3, lines 1-61 * | 8,9 | |
| | -- | | |
| A | US - A - 3 667 042 (ENGEL et al.) | | |
| | * abstract; figures * | 6 | |
| | ------------- | | **CATEGORY OF CITED DOCUMENTS** |

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-03-1982 | LLOYD |

EPO Form 1503.1  06.78